# EUROPEAN PATENT APPLICATION

(11) **EP 4 772 274 A1**
(43) Date of publication of application: **08.07.2026**
(21) Application number: 24859560.5
(22) Date of filing: 21.08.2024
(51) Int. Cl.: B01J 23/63, B01D 53/94, B01J 35/57, F01N 3/10

(54) **EXHAUST GAS PURIFICATION CATALYST**

(30) Priority: 30.08.2023 JP 2023139973
(71) Applicant: Mitsui Kinzoku Company, Limited, Tokyo 141-8584 (JP)
(72) Inventor: ISAYAMA Akihiro, Ageo-shi, Saitama 362-0025 (JP); SAEKI Shohei, Ageo-shi, Saitama 362-0025 (JP); ASAKOSHI Toshiki, Ageo-shi, Saitama 362-0025 (JP); TAKEUCHI Ryo, Ageo-shi, Saitama 362-0025 (JP); WATANABE Tokuya, Ageo-shi, Saitama 362-0025 (JP); IWAKURA Hironori, Ageo-shi, Saitama 362-0025 (JP)
(74) Representative: Novagraaf Technologies
(86) International application number: PCT/JP2024/029575
(87) International publication number: WO 2025/047527

(57) **Abstract**

An exhaust gas purification catalyst includes an upstream catalyst provided on an upstream side in an exhaust gas flow direction; and a downstream catalyst provided on a downstream side in the exhaust gas flow direction, in which the upstream catalyst includes a substrate A and a layer a1 provided on the substrate A, the downstream catalyst includes a substrate B and a layer b1 provided on the substrate B, the layer a1 contains Rh and a Ce-Zr-Al-based composite oxide, the layer b1 contains Rh and a Ce-Zr-based composite oxide, a content of Al in terms of Al₂O₃ in the Ce-Zr-Al-based composite oxide contained in the layer a1 is 30 mass% or more with respect to a mass of the Ce-Zr-Al-based composite oxide, a content of the Ce-Zr-Al-based composite oxide contained in the layer a1 is 50 mass% or more with respect to a mass of the layer a1, and the layer b1 does not contain Al, or when Al is contained, a content of Al in terms of Al₂O₃ contained in the layer b1 is 30 mass% or less with respect to a mass of the layer b1.

## Description

### TECHNICAL FIELD

The present invention relates to an exhaust gas purification catalyst.

### BACKGROUND ART

An exhaust gas (hereinafter also referred to simply as "exhaust gas") emitted from internal combustion engines of automobiles, motorcycles, and the like contains harmful components such as HC (hydrocarbons), CO (carbon monoxide), and NOx (nitrogen oxides). In the related art, a three-way catalyst has been used for the purpose of purifying and detoxifying these harmful components. As the three-way catalyst, catalysts containing noble metals such as Pt (platinum), Pd (palladium), and Rh (rhodium) are known. Pt and Pd mainly act on the oxidation purification of HC and CO, and Rh mainly acts on the reduction purification of NOx. In recent years, attempts have been made to improve an exhaust gas purification performance of the noble metal catalyst as described above due to strengthening of exhaust gas regulations and increasing environmental awareness.

Patent Literature 1 describes an exhaust gas purification catalyst containing a dual catalyst in which a startup catalyst is combined with an under-floor catalyst disposed downstream of the startup catalyst in an exhaust gas flow direction. In this catalyst, an average thickness, a porosity, and the like of a catalyst coating layer of the under-floor catalyst are set within specific ranges. In addition, Patent Literature 1 describes an exhaust gas purification catalyst in which catalyst coating layers of the startup catalyst and the under-floor catalyst contain Rh, a ceria-zirconia composite oxide material, and Al₂O₃.

### CITATION LIST

### PATENT LITERATURE

Patent Literature 1: JP2016-185495A

### SUMMARY OF INVENTION

### TECHNICAL PROBLEM

However, in recent years, the exhaust gas purification catalyst is required to have a more excellent exhaust gas purification performance. In particular, since a temperature of the exhaust gas on an upstream side in the flow direction is high, an exhaust gas purification catalyst having more excellent durability is required.

Therefore, an object of the present invention is to provide an exhaust gas purification catalyst having excellent durability.

### SOLUTION TO PROBLEM

The gist of the present invention is as follows.
[1] An exhaust gas purification catalyst including:
   an upstream catalyst provided on an upstream side in an exhaust gas flow direction; and
   a downstream catalyst provided on a downstream side in the exhaust gas flow direction, in which
   the upstream catalyst includes a substrate A and a layer a1 provided on the substrate A,
   the downstream catalyst includes a substrate B and a layer b1 provided on the substrate B,
   the layer a1 contains Rh and a Ce-Zr-Al-based composite oxide,
   the layer b1 contains Rh and a Ce-Zr-based composite oxide,
   a content of Al in terms of Al₂O₃ in the Ce-Zr-Al-based composite oxide contained in the layer a1 is 30 mass% or more with respect to a mass of the Ce-Zr-Al-based composite oxide,
   a content of the Ce-Zr-Al-based composite oxide contained in the layer a1 is 50 mass% or more with respect to a mass of the layer a1, and
   the layer b1 does not contain Al, or when Al is contained, a content of Al in terms of Al₂O₃ contained in the layer b1 is 30 mass% or less with respect to a mass of the layer b1.
[2] The exhaust gas purification catalyst according to [1], in which a content of Ce in terms of CeO₂ in the Ce-Zr-based composite oxide contained in the layer b1 is 25 mass% or less with respect to a mass of the Ce-Zr-based composite oxide.
[3] The exhaust gas purification catalyst according to [1] or [2], in which
   the layer b1 contains an Al-based oxide, and
   the Al-based oxide does not contain La, or when La is contained, a content of La in terms of La₂O₃ in the Al-based oxide is 7 mass% or less with respect to a mass of the Al-based oxide.
[4] The exhaust gas purification catalyst according to any one of [1] to [3], in which a content of Ce in terms of CeO₂ in the Ce-Zr-Al-based composite oxide contained in the layer a1 is 2 mass% or more and 40 mass% or less with respect to the mass of the Ce-Zr-Al-based composite oxide.
[5] The exhaust gas purification catalyst according to any one of [1] to [4], in which a content of Zr in terms of ZrO₂ in the Ce-Zr-Al-based composite oxide contained in the layer a1 is 10 mass% or more and 70 mass% or less with respect to the mass of the Ce-Zr-Al-based composite oxide.
[6] The exhaust gas purification catalyst according to any one of [1] to [5], in which a content of Al in terms of Al₂O₃ in the Ce-Zr-Al-based composite oxide contained in the layer a1 is 60 mass% or less with respect to the mass of the Ce-Zr-Al-based composite oxide.
[7] The exhaust gas purification catalyst according to any one of [1] to [6], in which 60 mass% or more of Rh contained in the layer b1 is supported on the Ce-Zr-based composite oxide.
[8] The exhaust gas purification catalyst according to any one of [1] to [7], in which
   a layer a2 is provided between the substrate A and the layer a1,
   the layer a2 contains Pd and a Ce-Zr-based composite oxide, and
   the layer a2 does not contain a Ce-Zr-Al-based composite oxide, or when the Ce-Zr-Al-based composite oxide is contained, a content of the Ce-Zr-based composite oxide contained in the layer a2 is 50 mass% or more with respect to a total mass of the Ce-Zr-based composite oxide and the Ce-Zr-Al-based composite oxide contained in the layer a2.

### ADVANTAGEOUS EFFECTS OF INVENTION

According to the present invention, an exhaust gas purification catalyst having excellent durability can be provided.

### BRIEF DESCRIPTION OF DRAWINGS

[FIG. 1] FIG. 1 is a schematic diagram of an exhaust gas purification catalyst according to an embodiment of the present invention.
[FIG. 2] FIG. 2 is a schematic diagram of an exhaust gas purification catalyst according to an embodiment of the present invention.

### DESCRIPTION OF EMBODIMENTS

Hereinafter, embodiments of the present invention will be described in detail.

An exhaust gas purification catalyst according to the present invention is an exhaust gas purification catalyst containing:
an upstream catalyst provided on an upstream side in an exhaust gas flow direction; and
a downstream catalyst provided on a downstream side in the exhaust gas flow direction, in which
the upstream catalyst includes a substrate A and a layer a1 provided on the substrate A,
the downstream catalyst includes a substrate B and a layer b1 provided on the substrate B,
the layer a1 contains Rh and a Ce-Zr-Al-based composite oxide,
the layer b1 contains Rh and a Ce-Zr-based composite oxide,
a content of Al in terms of Al₂O₃ in the Ce-Zr-Al-based composite oxide contained in the layer a1 is 30 mass% or more with respect to a mass of the Ce-Zr-Al-based composite oxide,
a content of the Ce-Zr-Al-based composite oxide contained in the layer a1 is 50 mass% or more with respect to a mass of the layer a1, and
the layer b1 does not contain Al, or when Al is contained, a content of Al in terms of Al₂O₃ contained in the layer b1 is 30 mass% or less with respect to a mass of the layer b1.

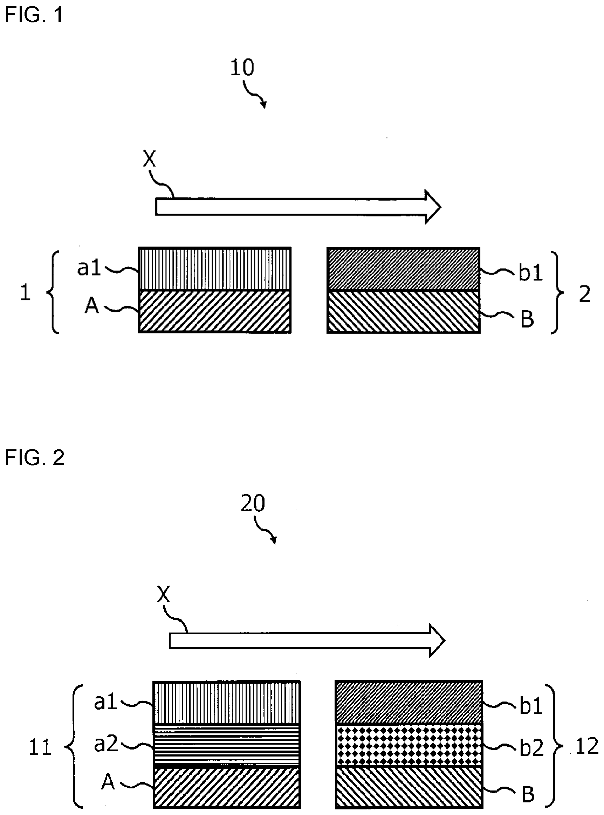

FIG. 1 shows a schematic diagram of an exhaust gas purification catalyst according to an embodiment of the present invention.

An exhaust gas purification catalyst 10 in FIG. 1 includes an upstream catalyst 1 and a downstream catalyst 2. The upstream catalyst 1 is provided on an upstream side in an exhaust gas flow direction X, and the downstream catalyst 2 is provided on a downstream side in the exhaust gas flow direction X.

The upstream catalyst 1 includes a substrate A and a layer a1 provided on the substrate A. The layer a1 contains Rh and a Ce-Zr-Al-based composite oxide.

A content of Al in terms of Al₂O₃ in the Ce-Zr-Al-based composite oxide contained in the layer a1 is 30 mass% or more with respect to a mass of the Ce-Zr-Al-based composite oxide.

A content of the Ce-Zr-Al-based composite oxide contained in the layer a1 is 50 mass% or more with respect to a mass of the layer a1.

The downstream catalyst 2 includes a substrate B and a layer b1 provided on the substrate B. The layer b1 contains Rh and a Ce-Zr-based composite oxide.

The layer b1 does not contain Al, or when Al is contained, a content of Al in terms of Al₂O₃ contained in the layer b1 is 30 mass% or less with respect to a mass of the layer b1.

The exhaust gas purification catalyst according to the present invention exhibits an effect of excellent durability due to the above configuration. The mechanism by which the above effect is obtained by the present invention has not been completely clarified, but the present inventors have presumed as described below. However, the present invention is not limited by the following presumed mechanism.

Rh enters an oxidized state and is deactivated when a concentration of an oxidizing component such as O₂ or NOx in the exhaust gas is a certain level or more. The deactivated Rh is reduced and the activity thereof is recovered when a concentration of a reducing component such as HC or CO is a certain level or more.

Al₂O₃ has excellent heat resistance, and thus improves the heat resistance of the exhaust gas purification catalyst, while Al₂O₃ has a property of stabilizing the oxidized state of Rh.

Since a temperature of the exhaust gas is high on the upstream side, the upstream catalyst is required to have higher heat resistance. On the other hand, since the exhaust gas from an internal combustion engine directly reaches the upstream side, a fluctuation range of the concentration of the reducing component such as HC or CO is larger than that on the downstream side, and the concentration is likely to be high enough to reduce Rh whose oxidized state is stabilized by Al₂O₃.

Since the temperature of the exhaust gas on the downstream side is lower than that on the upstream side, the downstream catalyst is less required to have heat resistance than the upstream catalyst. On the other hand, since the exhaust gas from the internal combustion engine reaches the downstream side after passing through the upstream catalyst and being partially purified, the fluctuation range of the concentration of the reducing component such as HC or CO is smaller than that on the upstream side, and the concentration is less likely to be high enough to reduce Rh whose oxidized state is stabilized by Al₂O₃.

From the above, it is considered that the content of Al₂O₃ is increased on the upstream side where improvement of the heat resistance is more important than alleviation of the deactivation of Rh, and the content of Al₂O₃ is decreased on the downstream side where the alleviation of the deactivation of Rh is more important than the improvement of the heat resistance.

However, it has been found that when the Ce-Zr-based composite oxide and Al₂O₃ are separately contained as in an upstream side catalyst layer as described in Patent Literature 1, a sufficient exhaust gas purification performance cannot be obtained after the catalyst is exposed to a high-temperature environment.

In contrast, in the present invention, in a catalyst layer of the upstream catalyst, the Ce-Zr-based composite oxide and Al₂O₃ are not separately added, but are converted into the form of the Ce-Zr-Al-based composite oxide, so that a sufficient exhaust gas purification performance can be obtained even after exposure to a high-temperature environment. This is because, in the case where same amounts of Ce, Zr, and Al are added to the catalyst layer, higher heat resistance can be obtained by adding Ce, Zr, and Al in the form of the Ce-Zr-Al-based composite oxide than by separately adding the Ce-Zr-based composite oxide and Al₂O₃. However, in order to obtain such high heat resistance, it is necessary to set the content of Al in terms of Al₂O₃ to 30 mass% or more with respect to the mass of the Ce-Zr-Al-based composite oxide so as to form a good composite oxide. When the content of Al in terms of Al₂O₃ needs to be less than 30 mass% with respect to the mass of the Ce-Zr-Al-based composite oxide, a good composite oxide is not formed, and therefore, better performance is obtained when the Ce-Zr-based composite oxide and Al₂O₃ are separately added.

The substrate A of the upstream catalyst 1 and the substrate B of the downstream catalyst 2 may be separate substrates or the same substrate (that is, the layer a1 and the layer b1 may be provided on one substrate).

In FIG. 1, the upstream catalyst 1 and the downstream catalyst 2 are drawn separately, but the upstream catalyst 1 and the downstream catalyst 2 may be in contact with each other.

The upstream catalyst 1 and the downstream catalyst 2 may be housed in the same casing or may be housed in separate casings.

Each of the layer a1 and the layer b1 is a catalyst layer containing Rh, and the exhaust gas purification catalyst according to the present invention may further have another catalyst layer. FIG. 2 shows a schematic diagram of an exhaust gas purification catalyst according to an embodiment of the present invention having another catalyst layer. An exhaust gas purification catalyst 20 in FIG. 2 includes an upstream catalyst 11 and a downstream catalyst 12. The upstream catalyst 11 is provided on the upstream side in the exhaust gas flow direction X, and the downstream catalyst 12 is provided on the downstream side in the exhaust gas flow direction X. The upstream catalyst 11 is the same as the upstream catalyst 1 in FIG. 1 except that a layer a2 is provided between the substrate A and the layer a1. The downstream catalyst 12 is the same as the upstream catalyst 2 in FIG. 1 except that a layer b2 is provided between the substrate B and the layer b1.

### [Upstream Catalyst]

The upstream catalyst includes the substrate A and the layer a1 provided on the substrate A.

### <Substrate A>

As the substrate A, a substrate used in a well-known exhaust gas purification catalyst can be used, and for example, a substrate including the partition wall made of a porous material and an exhaust gas flow path (space between the partition walls) defined by the partition walls can be suitably used. As a shape of the substrate A, a known substrate such as a honeycomb, a DPF, or a GPF can be suitably used. Examples of the material for the partition walls of the substrate A include ceramics such as alumina (Al₂O₃), mullite (3Al₂O₃-2SiO₂), cordierite (2MgO-2Al₂O₃-5SiO₂), aluminum titanate (Al₂TiO₅), and silicon carbide (SiC), and metal materials such as stainless steel.

### <Layer a1>

The layer a1 contains Rh and a Ce-Zr-Al-based composite oxide.

Rh is a catalytically active component.

A content of Rh in the layer a1 is preferably 0.010 mass% or more, more preferably 0.050 mass% or more, and still more preferably 0.10 mass% or more, with respect to the mass of the layer a1. In addition, the content of Rh in the layer a1 is preferably 5 mass% or less, more preferably 3 mass% or less, and still more preferably 2 mass% or less, with respect to the mass of the layer a1.

The content of each element including Rh in the layer a1 can be determined by a well-known method such as scanning electron microscope-energy dispersive X-ray spectrometry (SEM-EDX). Specifically, it is as follows. A sample obtained from the layer a1 is subjected to elemental analysis using a well-known method such as SEM-EDX to specify the kinds of constituent elements of the entire sample, and to determine the content (mass%) of each specified metal element. In each of 10 visual fields of the SEM, the content (mass%) of each metal element is determined, and an average value of the contents (mass%) of each metal element in the 10 visual fields is defined as the content (mass%) of each metal element in the layer a1.

Note that, when calculating the content (mass%) by the above method, the content is calculated assuming that Ru, Rh, Pd, Ag, Os, Ir, Pt, and Au are in a metal state, and other metal elements are in an oxide state. Specific forms of oxides in each element are as follows. An oxide of a rare earth element other than Ce, Pr, and Tb is a sesquioxide (M₂O₃, M represents a rare earth element other than Ce, Pr, and Tb), an oxide of Ce is CeO₂, an oxide of Pr is Pr₆O₁₁, an oxide of Tb is Tb₄O₇, an oxide of Al is Al₂O₃, an oxide of Zr is ZrO₂, an oxide of Si is SiO₂, an oxide of B is B₂O₃, an oxide of Mg is MgO, an oxide of Ca is CaO, an oxide of Sr is SrO, an oxide of Ba is BaO, an oxide of Fe is Fe₃O₄, an oxide of Mn is Mn₃O₄, an oxide of Cu is CuO, an oxide of Ti is TiO₂, an oxide of Zn is ZnO, and an oxide of Sn is SnO₂.

It is preferable that 70 mass% or more of Rh contained in the layer a1 is supported on the Ce-Zr-Al-based composite oxide, it is more preferable that 80 mass% or more of Rh contained in the layer a1 is supported on the Ce-Zr-Al-based composite oxide, and it is still more preferable that 90 mass% or more of Rh contained in the layer a1 is supported on the Ce-Zr-Al-based composite oxide. The proportion of Rh supported on the Ce-Zr-Al-based composite oxide can be adjusted based on, for example, the content of the Ce-Zr-Al-based composite oxide contained in the layer a1. The definition of the support will be described later.

The layer a1 may contain, in addition to Rh, a catalytically active component other than Rh. As the catalytically active component other than Rh, well-known catalytically active components can be used, and examples thereof include Pd, Pt, gold (Au), silver (Ag), iridium (Ir), ruthenium (Ru), and osmium (Os).

The "Ce-Zr-Al-based composite oxide" refers to a composite oxide containing Ce (cerium), Zr (zirconium), and Al (aluminum), in which a content of Ce in terms of CeO₂ in the composite oxide is 1 mass% or more and 94 mass% or less with respect to the mass of the composite oxide, a content of Zr in terms of ZrO₂ in the composite oxide is 1 mass% or more and 94 mass% or less with respect to the mass of the composite oxide, and the content of Al in terms of Al₂O₃ in the composite oxide is 5 mass% or more and less than 98 mass% with respect to the mass of the composite oxide. The Ce-Zr-Al-based composite oxide is usually in a particulate form. Whether the layer a1 contains the Ce-Zr-Al-based composite oxide can be determined by a well-known method such as SEM-EDX. Specifically, it is as follows. First, a sample including the layer a1 is analyzed by SEM-EDX, and particles containing three elements of Ce, Zr, and Al are specified by the obtained element mapping. Next, composition analysis (elemental analysis) is performed on the specified particles, and when the result of the composition analysis is within the above range, it can be determined that the material is a Ce-Zr-Al-based composite oxide.

The Ce-Zr-Al-based composite oxide can function as an oxygen storage component (hereinafter, also referred to as an "OSC material").

In addition, the Ce-Zr-Al-based composite oxide can function as a carrier component that supports the above catalytically active component. Note that, "supporting the catalytically active component" refers to a state where the catalytically active component is physically or chemically adsorbed or held on an outer surface or an inner surface of pores. Specifically, regarding "the carrier component supports the catalytically active component", for example, when it is found that the carrier component and the catalytically active component are present in the same region by element mapping obtained by analyzing a cross section of the exhaust gas purification catalyst using an energy dispersive spectrometer (EDS), it can be determined that the carrier component "supports" the catalytically active component.

The content of Al in terms of Al₂O₃ in the Ce-Zr-Al-based composite oxide contained in the layer a1 is 30 mass% or more, with respect to the mass of the Ce-Zr-Al-based composite oxide. When the content of Al in terms of Al₂O₃ is set to 30 mass% or more, a good composite oxide is formed, and higher heat resistance and higher exhaust gas purification performance than those obtained by separately adding the Ce-Zr-based composite oxide and Al₂O₃ are obtained.

The content of Al in terms of Al₂O₃ in the Ce-Zr-Al-based composite oxide contained in the layer a1 is preferably 35 mass% or more, and more preferably 40 mass% or more, with respect to the mass of the Ce-Zr-Al-based composite oxide. In addition, the content of Al in terms of Al₂O₃ in the Ce-Zr-Al-based composite oxide contained in the layer a1 is preferably 60 mass% or less, more preferably 55 mass% or less, and still more preferably 50 mass% or less, with respect to the mass of the Ce-Zr-Al-based composite oxide.

From the viewpoint of improving an oxygen storage capacity and the heat resistance, the content of Ce in terms of CeO₂ in the Ce-Zr-Al-based composite oxide contained in the layer a1 is preferably 2 mass% or more and 40 mass% or less, more preferably 3 mass% or more and 20 mass% or less, and still more preferably 5 mass% or more and 15 mass% or less, with respect to the mass of the Ce-Zr-Al-based composite oxide.

From the viewpoint of improving the oxygen storage capacity and the heat resistance, the content of Zr in terms of ZrO₂ in the Ce-Zr-Al-based composite oxide contained in the layer a1 is preferably 10 mass% or more and 70 mass% or less, more preferably 15 mass% or more and 60 mass% or less, and still more preferably 20 mass% or more and 50 mass% or less, with respect to the mass of the Ce-Zr-Al-based composite oxide.

The Ce-Zr-Al-based composite oxide contained in the layer a1 may contain a rare earth element other than Ce or an alkaline earth metal element such as barium (Ba), strontium (Sr), and calcium (Ca). Examples of the rare earth element other than Ce include scandium (Sc), yttrium (Y), lanthanum (La), praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb), and lutetium (Lu). These rare earth elements may be added to the Ce-Zr-Al-based composite oxide as an oxide, for example. The rare earth element and/or the alkaline earth metal element contained in the Ce-Zr-Al-based composite oxide may be one kind or two or more kinds.

The content of the Ce-Zr-Al-based composite oxide contained in the layer a1 is 50 mass% or more, preferably 60 mass% or more, more preferably 70 mass% or more, and still more preferably 85 mass% or more, with respect to the mass of the layer a1. In addition, the content of the Ce-Zr-Al-based composite oxide contained in the layer a1 is preferably 98 mass% or less, more preferably 97 mass% or less, and still more preferably 95 mass% or less, with respect to the mass of the layer a1.

The content of the Ce-Zr-Al-based composite oxide contained in the layer a1 can be determined by a well-known method such as SEM-EDX. Specifically, it is as follows.
(1) A sample obtained from the layer a1 is subjected to elemental analysis using a well-known method such as SEM-EDX to specify the kinds of constituent elements of the entire sample, and to determine the content (mass%) of each specified element.
(2) The sample obtained from the layer a1 is subjected to elemental mapping using a well-known method such as SEM-EDX to specify the kind of particles contained in the sample (for example, Ce-Zr-Al-based composite oxide particles and, in some cases, other particles).
(3) For each kind of particle, a plurality of (for example, 50) optionally selected particles are subjected to elemental analysis by SEM-EDX to specify the kind of the constituent element of the particle, and to determine the content (mass%) of each specified element. For each kind of particle, an average value of the contents (mass%) of each element is determined.
(4) An equation representing a relationship among the content (mass%) of each element in the sample, the content (mass%) of each element in each kind of particle, and the content (mass%) of each kind of particle in the sample is created and solved to calculate the content (mass%) of each kind of particle in the sample, and this is defined as the content (mass%) of each kind of particle in the layer a1.

The layer a1 may further contain components other than those described above.

For example, the layer a1 may contain a Ce-Zr-based composite oxide.

The "Ce-Zr-based composite oxide" refers to a composite oxide containing Ce and Zr, in which the content of Ce in terms of CeO₂ in the composite oxide is 5 mass% or more and 95 mass% or less with respect to a mass of the composite oxide, the content of Zr in terms of ZrO₂ in the composite oxide is 5 mass% or more and 95 mass% or less with respect to the mass of the composite oxide, and Al is not contained, or when Al is contained, the content of Al in terms of Al₂O₃ in the composite oxide is less than 5 mass% with respect to the mass of the composite oxide. The content in terms of oxide of each element in the Ce-Zr-based composite oxide can be determined in the same manner as the content in terms of oxide of each element in the Ce-Zr-Al-based composite oxide.

The layer a1 may contain an inorganic oxide other than the oxygen storage component as a carrier. Examples of the inorganic oxide other than the oxygen storage component include metal oxides other than the oxygen storage component described above, for example, rare earth oxides such as Al₂O₃, ZrO₂, SiO₂, TiO₂, La₂O₃, zeolite (aluminosilicate), oxide materials based on MgO, ZnO, SnO₂, or the like, and oxide materials obtained by combining these materials. Other examples include phosphates and borates of aluminum (Al), zirconium (Zr), silicon (Si), titanium (Ti), rare earth elements, magnesium (Mg), and zinc (Zn). The inorganic oxide other than the oxygen storage component is preferably a porous body. Examples of the porous body include those having a BET specific surface area of 30 m²/g or more and 600 m²/g or less.

Further, the layer a1 may contain an alkaline earth metal compound from the viewpoint of the heat resistance and suppressing a decrease in catalytic activity due to phosphorus poisoning. Preferred examples of the alkaline earth metal element include Sr and Ba. Examples of the alkaline earth metal compound include oxides and carbonates.

The layer a1 may contain a binder. The binder can be selected from, for example, alumina, zirconia, titania, silica, and ceria.

The mass of the layer a1 per unit volume of the substrate A is preferably 20 g/L or more and 150 g/L or less, more preferably 50 g/L or more and 120 g/L or less, and still more preferably 70 g/L or more and 100 g/L or less.

### <Other Layers and Layer a2>

The upstream catalyst may include other layers in addition to the substrate A and the layer a1 described above. Examples of the other layer include a layer containing a catalytically active component other than Rh. As the catalytically active component other than Rh, well-known catalytically active components can be used, and examples thereof include Pd, Pt, Au, Ag, Ir, Ru, and Os, and among them, Pd or Pt is preferred from the viewpoint of purifying HC, CO, and NOx in the exhaust gas in a well-balanced manner.

The other layer preferably further contains, in addition to the catalytically active component, a carrier component that supports the catalytically active component, from the viewpoint of efficiently exhibiting the exhaust gas purification performance by the catalytically active component. Examples of the carrier component include an oxygen storage component (OSC material) and an inorganic oxide other than the oxygen storage component.

The oxygen storage component is not particularly limited as long as it is a metal oxide that causes a change in valence of the constituent element under operating conditions of the exhaust gas purification catalyst and has an ability to store oxygen, and for example, a Ce-Zr-Al-based composite oxide or a Ce-Zr-based composite oxide is preferred.

The oxygen storage component may contain a rare earth element other than Ce or an alkaline earth metal element. Examples of the rare earth element other than Ce include the same rare earth element other than Ce that may be contained in the Ce-Zr-Al-based composite oxide contained in the layer a1 described above.

Examples of the oxygen storage component include, in addition to those described above, oxides of elements such as manganese (Mn), iron (Fe), and copper (Cu) that are likely to cause a change in valence state under use conditions of the catalyst, and a composite oxide containing these elements.

As the inorganic oxide other than the oxygen storage component, which is a carrier component supporting the catalytically active component, the same inorganic oxide as that of the layer a1 can be used.

Further, the other layer may contain an alkaline earth metal compound from the viewpoint of the heat resistance and suppressing a decrease in catalytic activity due to phosphorus poisoning. Preferred examples of the alkaline earth metal element include Sr and Ba. Examples of the alkaline earth metal compound include oxides and carbonates.

The layer a2 may contain a binder. The binder can be selected from, for example, alumina, zirconia, titania, silica, and ceria.

Examples of an embodiment in which the upstream catalyst includes another layer include an embodiment in which the upstream catalyst includes the layer a2 between the substrate A and the layer a1.

The layer a2 preferably contains Pd and a Ce-Zr-based composite oxide.

A content of Pd in the layer a2 is preferably 0.010 mass% or more, more preferably 0.050 mass% or more, and still more preferably 0.10 mass% or more, with respect to a mass of the layer a2. In addition, the content of Pd in the layer a2 is preferably 20 mass% or less, more preferably 15 mass% or less, and still more preferably 10 mass% or less, with respect to the mass of the layer a2. The content of Pd in the layer a2 can be determined in the same manner as the content of Rh in the layer a1.

The Ce-Zr-Al-based composite oxide has an advantage that the heat resistance is improved as described above, but has a disadvantage that an oxygen storage capacity (OSC) decreases, as compared with the case where Al₂O₃ and the Ce-Zr-based composite oxide containing the same amounts of Ce, Zr, and Al are separately present. In addition, as compared with Rh, Pd has a property that the catalytic activity is less likely to decrease even when the heat resistance of the oxygen storage component contained in the same layer is low. Therefore, the layer a2 preferably does not contain the Ce-Zr-Al-based composite oxide, or when the Ce-Zr-Al-based composite oxide is contained, the content of the Ce-Zr-based composite oxide contained in the layer a2 is preferably 50 mass% or more with respect to a total mass of the Ce-Zr-based composite oxide and the Ce-Zr-Al-based composite oxide contained in the layer a2.

When the layer a2 contains the Ce-Zr-Al-based composite oxide, the content of the Ce-Zr-based composite oxide contained in the layer a2 is more preferably 60 mass% or more with respect to the total mass of the Ce-Zr-based composite oxide and the Ce-Zr-Al-based composite oxide contained in the layer a2. The contents of the Ce-Zr-based composite oxide and the Ce-Zr-Al-based composite oxide contained in the layer a2 can be determined in the same manner as the content of the Ce-Zr-Al-based composite oxide contained in the layer a1.

The mass of the layer a2 per unit volume of the substrate A is preferably 50 g/L or more and 230 g/L or less, more preferably 70 g/L or more and 180 g/L or less, and still more preferably 80 g/L or more and 150 g/L or less.

### [Downstream Catalyst]

The downstream catalyst includes the substrate B and the layer b1 provided on the substrate B.

### <Substrate B>

The substrate B is the same as the substrate A described above.

### <Layer b1>

The layer b1 contains Rh and a Ce-Zr-based composite oxide.

Rh is a catalytically active component.

A content of Rh in the layer b1 is preferably 0.01 mass% or more, more preferably 0.05 mass% or more, and still more preferably 0.1 mass% or more, with respect to the mass of the layer b1. In addition, the content of Rh in the layer b1 is preferably 1.0 mass% or less, more preferably 0.5 mass% or less, and still more preferably 0.3 mass% or less, with respect to the mass of the layer b1. The content of Rh in the layer b1 can be determined in the same manner as the content of Rh in the layer a1.

It is preferable that 60 mass% or more of Rh contained in the layer b1 is supported on the Ce-Zr-based composite oxide, it is more preferable that 70 mass% or more of Rh contained in the layer b1 is supported on the Ce-Zr-based composite oxide, and it is still more preferable that 75 mass% or more of Rh contained in the layer b1 is supported on the Ce-Zr-based composite oxide. The proportion of Rh supported on the Ce-Zr-based composite oxide can be adjusted based on, for example, the content of the Ce-Zr-based composite oxide contained in the layer b1.

The layer b1 may contain, in addition to Rh, a catalytically active component other than Rh. As the catalytically active component other than Rh, well-known catalytically active components can be used, and examples thereof include Pd, Pt, Au, Ag, Ir, Ru, and Os.

The Ce-Zr-based composite oxide can function as an OSC material.

In addition, the Ce-Zr-based composite oxide can function as a carrier component that supports the above catalytically active component.

Since Ce has a property of stabilizing the oxidized state of Rh, the content of Ce in terms of CeO₂ in the Ce-Zr-based composite oxide contained in the layer b1 is preferably 35 mass% or less, and more preferably 25 mass% or less, with respect to the mass of the Ce-Zr-based composite oxide.

The content of Zr in terms of ZrO₂ in the Ce-Zr-based composite oxide contained in the layer b1 is preferably 10 mass% or more and 90 mass% or less, more preferably 15 mass% or more and 85 mass% or less, and still more preferably 20 mass% or more and 80 mass% or less, with respect to the mass of the Ce-Zr-based composite oxide.

The Ce-Zr-based composite oxide contained in the layer b1 may contain a rare earth element other than Ce or an alkaline earth metal element such as Ba, Sr, or Ca. Examples of the rare earth element other than Ce include those described above in the description of the layer a1.

The content of the Ce-Zr-based composite oxide contained in the layer b1 is preferably 50 mass% or more, more preferably 60 mass% or more, and still more preferably 65 mass% or more, with respect to the mass of the layer b1. In addition, the content of the Ce-Zr-based composite oxide contained in the layer b1 is preferably 95 mass% or less, more preferably 90 mass% or less, and still more preferably 85 mass% or less, with respect to the mass of the layer b1.

As described above, since Al₂O₃ has a property of stabilizing the oxidized state of Rh, from the viewpoint of improving the exhaust gas purification performance, the layer b1 does not contain Al, or when Al is contained, the content of Al contained in the layer b1 in terms of Al₂O₃ is 30 mass% or less with respect to the mass of the layer b1.

When the layer b1 contains Al, the content of Al in terms of Al₂O₃ contained in the layer b1 is preferably 25 mass% or less with respect to the mass of the layer b1. On the other hand, the downstream catalyst is also required to have heat resistance although lower than that of the upstream catalyst, and thus the content of Al in terms of Al₂O₃ contained in the layer b1 is preferably 10 mass% or more, and more preferably 15 mass% or more, with respect to the mass of the layer b1. The content of Al in terms of Al₂O₃ contained in the layer b1 can be determined in the same manner as the content of Rh.

The layer b1 may further contain components other than those described above.

The layer b1 may contain an Al-based oxide as a carrier, and the Al-based oxide may contain La, but since La has a property of stabilizing the oxidized state of Rh, the Al-based oxide preferably does not contain La, or when La is contained, a content of La in terms of La₂O₃ in the Al-based oxide is preferably 10 mass% or less with respect to a mass of the Al-based oxide.

When the layer b1 contains an Al-based oxide and the Al-based oxide contains La, the content of La in terms of La₂O₃ in the Al-based oxide is more preferably 8 mass% or less, still more preferably 7 mass% or less, even more preferably 5 mass% or less, and even still more preferably 3 mass% or less, with respect to the mass of the Al-based oxide. In addition, the content of La in terms of La₂O₃ may be 0.5 mass% or more with respect to the mass of the Al-based oxide. The content in terms of oxide of each element in the Al-based oxide can be determined in the same manner as the content in terms of oxide of each element in the Ce-Zr-Al-based composite oxide.

The layer b1 may contain, as a carrier, an inorganic oxide other than the Al-based oxide. In addition, the layer b may contain an alkaline earth metal compound from the viewpoint of the heat resistance and suppressing a decrease in catalytic activity due to phosphorus poisoning. As the inorganic oxide other than the Al-based oxide and the alkaline earth metal compound, those same as those of the layer a1 can be used.

The layer b1 may contain a binder. The binder can be selected from, for example, alumina, zirconia, titania, silica, and ceria. Note that, when the binder contained in the layer b1 contains an Al element, the content of Al in terms of Al₂O₃ contained in the layer b1 needs to be 30 mass% or less with respect to the mass of the layer b1, including Al derived from the binder.

The mass of the layer b1 per unit volume of the substrate B is preferably 20 g/L or more and 150 g/L or less, more preferably 50 g/L or more and 120 g/L or less, and still more preferably 70 g/L or more and 100 g/L or less.

### <Other Layers and Layer b2>

The downstream catalyst may include other layers in addition to the substrate B and the layer b1 described above. Examples of the other layer include a layer containing a catalytically active component other than Rh. As the catalytically active component other than Rh, well-known catalytically active components can be used, and examples thereof include Pd, Pt, Au, Ag, Ir, Ru, and Os, and Pd or Pt is preferred.

Examples of the other layer that may be included in the downstream catalyst include the same layers as the other layers that may be included in the upstream catalyst.

Examples of an embodiment in which the downstream catalyst includes another layer include an embodiment in which the upstream catalyst includes the layer b2 between the substrate B and the layer b1.

The layer b2 may contain, for example, Pt and a Ce-Zr-based composite oxide.

The layer b2 preferably does not contain the Ce-Zr-Al-based composite oxide, or when the Ce-Zr-Al-based composite oxide is contained, the content of the Ce-Zr-based composite oxide contained in the layer b2 is preferably 50 mass% or more with respect to a total mass of the Ce-Zr-based composite oxide and the Ce-Zr-Al-based composite oxide contained in the layer b2.

When the layer b2 contains the Ce-Zr-Al-based composite oxide, the content of the Ce-Zr-based composite oxide contained in the layer b2 is more preferably 60 mass% or more with respect to the total mass of the Ce-Zr-based composite oxide and the Ce-Zr-Al-based composite oxide contained in the layer b2.

The layer b2 may contain an inorganic oxide other than the oxygen storage component as a carrier. In addition, the layer b2 may contain an alkaline earth metal compound from the viewpoint of the heat resistance and suppressing a decrease in catalytic activity due to phosphorus poisoning. As the inorganic oxide other than the oxygen storage component and the alkaline earth metal compound, those same as those of the layer a1 can be used.

The layer b2 may contain a binder. The binder can be selected from, for example, alumina, zirconia, titania, silica, and ceria.

The mass of the layer b2 per unit volume of the substrate B is preferably 50 g/L or more and 230 g/L or less, more preferably 100 g/L or more and 180 g/L or less, and still more preferably 130 g/L or more and 160 g/L or less.

The exhaust gas purification catalyst according to the present invention can efficiently purify NOx, HC, and CO as an exhaust gas purification catalyst for an internal combustion engine. Therefore, it is possible to provide an exhaust gas purification system in which an exhaust gas from an internal combustion engine is introduced into an exhaust gas purification catalyst without passing through another exhaust gas purification catalyst in an exhaust path connected to the internal combustion engine. Note that, examples of the internal combustion engine include a gasoline engine, an engine using compressed natural gas as fuel, and an engine using gasoline (flex fuel) containing any amount of ethanol as fuel.

### <Production of Catalyst>

The exhaust gas purification catalyst according to the present invention can be produced by forming the layer a1 (and if necessary, the layer a2) on the substrate A and forming the layer b1 (and if necessary, the layer b2) on the substrate B.

In the case of forming the layer a2, the layer a2 can be formed by preparing a layer a2 forming slurry by mixing a supply source of the catalytically active component (for example, a nitrate, an ammine complex salt, an acetate, a chloride, or the like of Pd, Pt, or the like), a Ce-Zr-based composite oxide, and optionally other components (for example, an Al-based oxide, a binder, and a solvent), applying the layer a2 forming slurry onto the substrate A, followed by drying and calcining.

The layer a1 can be formed by preparing a layer a1 forming slurry by mixing a supply source of Rh (for example, a nitrate, an ammine complex salt, an acetate, or a chloride of Rh), a Ce-Zr-Al-based composite oxide, and optionally other components (for example, a Ce-Zr-based composite oxide, a binder, and a solvent), applying the layer a1 forming slurry onto the substrate A (on the layer a2 when the layer a2 is present), followed by drying and calcining.

In the case of forming the layer b2, the layer b2 can be formed by preparing a layer b2 forming slurry by mixing a supply source of a noble metal element (for example, a nitrate, an ammine complex salt, an acetate, a chloride, or the like of Pd, Pt, or the like) and optionally other components (for example, a Ce-Zr-based composite oxide, an Al-based oxide, a binder, and a solvent), applying the layer b2 forming slurry onto the substrate B, followed by drying and calcining.

The layer b1 can be formed by preparing a layer b1 forming slurry by mixing a supply source of Rh (for example, a nitrate, an ammine complex salt, an acetate, or a chloride of Rh), a Ce-Zr-based composite oxide, and optionally other components (for example, an Al-based oxide, a binder, and a solvent), applying the layer b1 forming slurry onto the substrate B (on the layer b2 when the layer b2 is present), followed by drying and calcining.

### EXAMPLES

Next, embodiments of the present invention will be specifically described with reference to the following Examples, but the present invention is not limited to these Examples.

### [Example 1]

### (1) Preparation of Lower Layer (Layer a2) Forming Slurry of Upstream Catalyst

An OSC material 1 (Ce-Zr-based composite oxide) having the following composition was prepared.

Content of Ce in terms of CeO₂: 40.0 mass%, content of Zr in terms of ZrO₂: 50.0 mass%, and content of rare earth element other than Ce in terms of oxide: 10.0 mass%

A palladium nitrate aqueous solution, the OSC material 1, La₂O₃-modified alumina (La₂O₃ modification amount: 1.0 mass%), a binder, and water were added to a preparation container, and mixed and stirred to prepare a layer a2 forming slurry. The amount of each component in the layer a2 forming slurry was adjusted such that the amount of Pd was 4.0 mass% in terms of metal, the amount of the OSC material 1 was 40.0 mass%, the amount of the La₂O₃-modified alumina was 50.0 mass%, and the amount of the binder was 6.0 mass%, based on the mass (100 mass%) of the layer a2 after calcining. Note that, the binder does not contain an Al element.

### (2) Formation of Lower Layer (Layer a2) of Upstream Catalyst

As a flow-through type substrate, a flow-through type substrate having cells extending in an axial direction defined by partition walls having a thickness of 50 µm to 70 µm at a density of 600 cells per square inch in a plane orthogonal to the axial direction and having a volume of 1.0 L was prepared.

The flow-through type substrate was immersed in the layer a2 forming slurry to obtain a flow-through type substrate coated with the layer a2 forming slurry. Next, the flow-through type substrate coated with the layer a2 forming slurry was dried at 150°C for 0.5 hours and then calcined at 500°C for 1 hour to form the layer a2. The mass of the layer a2 per unit volume of the portion of the flow-through type substrate where the layer a2 was formed was 100 g/L.

### (3) Preparation of Upper Layer (Layer a1) Forming Slurry of Upstream Catalyst

An OSC material 2 (Ce-Zr-Al-based composite oxide) having the following composition was prepared.

Content of Ce in terms of CeO₂: 10.0 mass%, content of Zr in terms of ZrO₂: 35.0 mass%, content of Al in terms of Al₂O₃: 45.0 mass%, and content of rare earth element other than Ce in terms of oxide: 10.0 mass%

A rhodium nitrate aqueous solution, the OSC material 2, a binder, and water were added to a preparation container, and mixed and stirred to prepare a layer a1 forming slurry. The amount of each component in the layer a1 forming slurry was adjusted such that the amount of Rh was 1.0 mass% in terms of metal, the amount of the OSC material 2 was 90.0 mass%, and the amount of the binder was 9.0 mass%, based on the mass (100 mass%) of the layer a1 after calcining. Note that, the binder does not contain an Al element.

### (4) Formation of Upper Layer (Layer a1) of Upstream Catalyst

The flow-through type substrate formed with the layer a2 was immersed in the layer a1 forming slurry to obtain a flow-through type substrate coated with the layer a1 forming slurry. Next, the flow-through type substrate coated with the layer a1 forming slurry was dried at 150°C for 0.5 hours and then calcined at 500°C for 1 hour to form the layer a1 on the layer a2. The mass of the layer a1 per unit volume of the portion of the flow-through type substrate where the layer a1 was formed was 80 g/L.

As described above, an upstream catalyst including the layer a2 formed on the flow-through type substrate and the layer a1 formed on the layer a2 was produced.

### (5) Preparation of Lower Layer (Layer b2) Forming Slurry of Downstream Catalyst

The OSC material 1 described above was prepared.

A platinum nitrate aqueous solution, the OSC material 1, La₂O₃-modified alumina (La₂O₃ modification amount: 1.0 mass%), a binder, and water were added to a preparation container, and mixed and stirred to prepare a layer b2 forming slurry. The amount of each component in the layer b2 forming slurry was adjusted such that the amount of Pt was 1.0 mass% in terms of metal, the amount of the OSC material 1 was 60.0 mass%, the amount of the La₂O₃-modified alumina was 30.0 mass%, and the amount of the binder was 9.0 mass%, based on the mass (100 mass%) of the layer b2 after calcining. Note that, the binder does not contain an Al element.

### (6) Formation of Lower Layer (Layer b2) of Downstream Catalyst

As a flow-through type substrate, a flow-through type substrate having cells extending in an axial direction defined by partition walls having a thickness of 50 µm to 70 µm at a density of 600 cells per square inch in a plane orthogonal to the axial direction and having a volume of 1.0 L was prepared.

The flow-through type substrate was immersed in the layer b2 forming slurry to obtain a flow-through type substrate coated with the layer b2 forming slurry. Next, the flow-through type substrate coated with the layer b2 forming slurry was dried at 150°C for 0.5 hours and then calcined at 500°C for 1 hour to form the layer b2. The mass of the layer b2 per unit volume of the portion of the flow-through type substrate where the layer b2 was formed was 140 g/L.

### (7) Preparation of Upper Layer (Layer b1) Forming Slurry of Downstream Catalyst

An OSC material 3 (Ce-Zr-based composite oxide) having the following composition was prepared.

Content of Ce in terms of CeO₂: 20.0 mass%, content of Zr in terms of ZrO₂: 70.0 mass%, and content of rare earth element other than Ce in terms of oxide: 10.0 mass%

A rhodium nitrate aqueous solution, the OSC material 3, La₂O₃-modified alumina (La₂O₃ modification amount: 1.0 mass%), a binder, and water were added to a preparation container, and mixed and stirred to prepare a layer b1 forming slurry. The amount of each component in the layer b1 forming slurry was adjusted such that the amount of Rh was 0.2 mass% in terms of metal, the amount of the OSC material 3 was 70.0 mass%, the amount of the La₂O₃-modified alumina was 20.0 mass%, and the amount of the binder was 9.8 mass%, based on the mass (100 mass%) of the layer b1 after calcining. Note that, the binder does not contain an Al element.

### (8) Formation of Upper Layer (Layer b1) of Downstream Catalyst

The flow-through type substrate formed with the layer b2 was immersed in the layer b1 forming slurry to obtain a flow-through type substrate coated with the layer b1 forming slurry. Next, the flow-through type substrate coated with the layer b1 forming slurry was dried at 150°C for 0.5 hours and then calcined at 500°C for 1 hour to form the layer b1 on the layer b2. The mass of the layer b1 per unit volume of the portion of the flow-through type substrate where the layer b1 was formed was 80 g/L.

As described above, a downstream catalyst including the layer b2 formed on the flow-through type substrate and the layer b1 formed on the layer b2 was produced.

As described above, an exhaust gas purification catalyst including the upstream catalyst and the downstream catalyst was produced.

### [Example 2]

An exhaust gas purification catalyst was produced in the same manner as in Example 1 except that the La₂O₃ modification amount of the La₂O₃-modified alumina in the layer b1 forming slurry was changed to 4.0 mass% in the production of the downstream catalyst.

### [Example 3]

An exhaust gas purification catalyst was produced in the same manner as in Example 1 except that the La₂O₃ modification amount of the La₂O₃-modified alumina in the layer b1 forming slurry was changed to 6.0 mass% in the production of the downstream catalyst.

### [Example 4]

An exhaust gas purification catalyst was produced in the same manner as in Example 1 except that the La₂O₃ modification amount of the La₂O₃-modified alumina in the layer b1 forming slurry was changed to 9.0 mass% in the production of the downstream catalyst.

### [Example 5]

An exhaust gas purification catalyst was produced in the same manner as in Example 1 except that an OSC material 4 (Ce-Zr-based composite oxide) having the following composition was used instead of the OSC material 3 used in preparing the layer b1 forming slurry in the production of the downstream catalyst.

Content of Ce in terms of CeO₂: 30.0 mass%, content of Zr in terms of ZrO₂: 60.0 mass%, and content of rare earth element other than Ce in terms of oxide: 10.0 mass%

### [Example 6]

An OSC material 5 (Ce-Zr-Al-based composite oxide) having the following composition was prepared.

Content of Ce in terms of CeO₂: 20.0 mass%, content of Zr in terms of ZrO₂: 30.0 mass%, content of Al in terms of Al₂O₃: 40.0 mass%, and content of rare earth element other than Ce in terms of oxide: 10.0 mass%

An exhaust gas purification catalyst was produced in the same manner as in Example 1 except that, in the production of the upstream catalyst, the amount of each component in the layer a2 forming slurry was adjusted such that the amount of Pd was 4.0 mass% in terms of metal, the amount of the OSC material 5 was 90.0 mass%, and the amount of the binder was 6.0 mass%, based on the mass (100 mass%) of the layer a2 after calcining.

### [Example 7]

The OSC material 2 and the OSC material 3 described above were prepared.

An exhaust gas purification catalyst was produced in the same manner as in Example 1 except that, in the production of the upstream catalyst, the amount of each component in the layer a1 forming slurry was adjusted such that the amount of Rh was 1.0 mass% in terms of metal, the amount of the OSC material 2 was 64.0 mass%, the amount of the OSC material 3 was 26.0 mass%, and the amount of the binder was 9.0 mass%, based on the mass (100 mass%) of the layer a1 after calcining.

### [Example 8]

An exhaust gas purification catalyst was produced in the same manner as in Example 1 except that, in the production of the downstream catalyst, the amount of each component in the layer b1 forming slurry was adjusted such that the amount of Rh was 0.2 mass% in terms of metal, the amount of the OSC material 3 was 60.0 mass%, the amount of the La₂O₃ modified alumina was 30.0 mass%, and the amount of the binder was 9.8 mass%, based on the mass (100 mass%) of the layer b1 after calcining.

### [Example 9]

An exhaust gas purification catalyst was produced in the same manner as in Example 1 except that, in the production of the downstream catalyst, no La₂O₃-modified alumina was used in preparing the layer b1 forming slurry, and the amount of each component in the layer b1 forming slurry was adjusted such that the amount of Rh was 0.2 mass% in terms of metal, the amount of the OSC material 3 was 90.0 mass%, and the amount of the binder was 9.8 mass%, based on the mass (100 mass%) of the layer b1 after calcining.

### [Comparative Example 1]

The OSC material 3 described above was prepared.

An exhaust gas purification catalyst was produced in the same manner as in Example 1 except that, in the production of the upstream catalyst, the OSC material 3 and La₂O₃ modified alumina (La₂O₃ modification amount: 1.0 mass%) were used instead of the OSC material 2 used in the preparation of the layer a1 forming slurry, and the amount of each component in the layer a1 forming slurry was adjusted such that the amount of Rh was 1.0 mass% in terms of metal, the amount of the OSC material 3 was 45.0 mass%, the amount of the La₂O₃ modified alumina was 45.0 mass%, and the amount of the binder was 9.0 mass%, based on the mass (100 mass%) of the layer a1 after calcining.

### [Comparative Example 2]

The OSC material 2 described above was prepared.

An exhaust gas purification catalyst was produced in the same manner as in Comparative Example 1 except that, in the production of the downstream catalyst, the OSC material 2 was used instead of the OSC material 3 and the La₂O₃ modified alumina (La₂O₃ modification amount: 1.0 mass%) used in the preparation of the layer b1 forming slurry, and the amount of each component in the layer b1 forming slurry was adjusted such that the amount of Rh was 0.2 mass% in terms of metal, the amount of the OSC material 2 was 90.0 mass%, and the amount of the binder was 9.8 mass%, based on the mass (100 mass%) of the layer b1 after calcining.

### [Comparative Example 3]

An exhaust gas purification catalyst was produced in the same manner as in Example 1 except that, in the production of the upstream catalyst, the OSC material 3 was further used in the preparation of the layer a1 forming slurry, and the amount of each component in the layer a1 forming slurry was adjusted such that the amount of Rh was 1.0 mass% in terms of metal, the amount of the OSC material 2 was 46.0 mass%, the amount of the OSC material 3 was 44.0 mass%, and the amount of the binder was 9.0 mass%, based on the mass (100 mass%) of the layer a1 after calcining.

### [Comparative Example 4]

An exhaust gas purification catalyst was produced in the same manner as in Example 1 except that, in the production of the upstream catalyst, the OSC material 3 was further used in the preparation of the layer a1 forming slurry, and the amount of each component in the layer a1 forming slurry was adjusted such that the amount of Rh was 1.0 mass% in terms of metal, the amount of the OSC material 2 was 27.0 mass%, the amount of the OSC material 3 was 63.0 mass%, and the amount of the binder was 9.0 mass%, based on the mass (100 mass%) of the layer a1 after calcining.

### [Comparative Example 5]

An exhaust gas purification catalyst was produced in the same manner as in Example 1 except that, in the production of the downstream catalyst, the amount of each component in the layer b1 forming slurry was adjusted such that the amount of Rh was 0.2 mass% in terms of metal, the amount of the OSC material 3 was 48.0 mass%, the amount of the La₂O₃ modified alumina was 42.0 mass%, and the amount of the binder was 9.8 mass%, based on the mass (100 mass%) of the layer b1 after calcining.

### [Comparative Example 6]

An exhaust gas purification catalyst was produced in the same manner as in Example 1 except that, in the production of the downstream catalyst, the amount of each component in the layer b1 forming slurry was adjusted such that the amount of Rh was 0.2 mass% in terms of metal, the amount of the OSC material 3 was 38.0 mass%, the amount of the La₂O₃ modified alumina was 52.0 mass%, and the amount of the binder was 9.8 mass%, based on the mass (100 mass%) of the layer b1 after calcining.

### [Comparative Example 7]

The OSC material 5 described above was prepared.

An exhaust gas purification catalyst was produced in the same manner as in Comparative Example 1 except that, in the production of the upstream catalyst, the OSC material 5 was used instead of the OSC material 1 and the La₂O₃ modified alumina (La₂O₃ modification amount: 1.0 mass%) used in the preparation of the layer a2 forming slurry, and the amount of each component in the layer a2 forming slurry was adjusted such that the amount of Pd was 4.0 mass% in terms of metal, the amount of the OSC material 5 was 90.0 mass%, and the amount of the binder was 6.0 mass%, based on the mass (100 mass%) of the layer a2 after calcining.

### (Evaluation of Durability)

For the exhaust gas purification catalysts in Examples 1 to 9 and Comparative Examples 1 to 7, the following durability conditions were imposed as a deterioration treatment assuming running of 100,000 km to 200,000 km.

### <Durability Conditions>

· Durability engine: a passenger-car 2 L NA gasoline engine
· Gasoline used: commercially available regular gasoline
· Treatment temperature: 900°C
· Treatment time: 100 hours

Each of the exhaust gas purification catalysts (upstream catalyst and downstream catalyst) in Examples 1 to 9 and Comparative Examples 1 to 7 was disposed in an exhaust path of the engine, and a durability test was performed under the above conditions. The exhaust gas purification catalyst after the durability test was installed in a vehicle (a passenger car equipped with a direct injection turbo engine of 1.5 L), and the vehicle was operated according to the operating conditions of the Worldwide Harmonized Light Vehicles Test Cycle (WLTC). During a low-temperature operation from the start of the operation to 589 seconds, during a medium-speed operation from 589 seconds to 1022 seconds from the start of the operation, during a high-speed operation from 1022 seconds to 1477 seconds from the start of the operation, and during an ultrahigh-speed operation from 1477 seconds to 1800 seconds from the start of the operation, emission amounts of non-methane hydrocarbon (NMHC) and nitrogen oxides (NOx) in the exhaust gas having passed through the exhaust gas purification catalyst were measured, and a total emission amount of NMHC and NOx per unit running distance was determined.

An authentication test fuel was used as gasoline, and an exhaust gas measurement device manufactured by Horiba, Ltd. was used as an exhaust gas measurement device.

The results are shown in Table 1. In Table 1, the total emission amount of NMHC and NOx is shown in the column of "emission amount (relative value)" as a relative value when the value in Example 1 is 1.00.

In Table 1, "CZA" represents a Ce-Zr-Al-based composite oxide, and "CZ" represents a Ce-Zr-based composite oxide.

**[Table 1]**

| | Upstream catalyst | | | | | | | | | Downstream catalyst | | | | | | | | Emission amount (relative value) |
|---|---|---|---|---|---|---|---|---|---|---|---|---|---|---|---|---|---|---|
| | Layer a1 | | | | | | | Layer a2 | | Layer b1 | | | | | | Layer b2 | | |
| | Catalytically active component | Carrier | CZA content (mass%) | Content (mass%) in CZA | | | | Catalytically active component | Carrier | Catalytically active component | Carrier | Content (mass%) of Al₂O₃ | Content (mass%) of La in Al-based oxide | Content (mass%) in CZ | Proportion (mass%) of Rh contained in layer b1 supported on Ce-Zr-based composite oxide | Catalytically active component | Carrier | |
| | | | | Al₂O₃ | CeO₂ | ZrO₂ | Rare earth element other than Ce | | | | | | | CeO₂ | | | | |
| Example 1 | Rh | CZA | 90.0 | 45 | 10 | 35 | 10 | Pd | CZ+Al₂O₃ | Rh | CZ+Al₂O₃ | 19.8 | 1.0 | 20.0 | 78 | Pt | CZ+Al₂O₃ | 1.00 |
| Example 2 | Rh | CZA | 90.0 | 45 | 10 | 35 | 10 | Pd | CZ+Al₂O₃ | Rh | CZ+Al₂O₃ | 19.2 | 4.0 | 20.0 | 78 | Pt | CZ+Al₂O₃ | 1.02 |
| Example 3 | Rh | CZA | 90.0 | 45 | 10 | 35 | 10 | Pd | CZ+Al₂O₃ | Rh | CZ+Al₂O₃ | 18.8 | 6.0 | 20.0 | 78 | Pt | CZ+Al₂O₃ | 1.04 |
| Example 4 | Rh | CZA | 90.0 | 45 | 10 | 35 | 10 | Pd | CZ+Al₂O₃ | Rh | CZ+Al₂O₃ | 18.2 | 9.0 | 20.0 | 78 | Pt | CZ+Al₂O₃ | 1.00 |
| Example 5 | Rh | CZA | 90.0 | 45 | 10 | 35 | 10 | Pd | CZ+Al₂O₃ | Rh | CZ+Al₂O₃ | 19.8 | 1.0 | 30.0 | 78 | Pt | CZ+Al₂O₃ | 1.04 |
| Example 6 | Rh | CZA | 90.0 | 45 | 10 | 35 | 10 | Pd | CZA | Rh | CZ+Al₂O₃ | 19.8 | 1.0 | 20.0 | 78 | Pt | CZ+Al₂O₃ | 1.02 |
| Example 7 | Rh | CZA+CZ | 64.0 | 45 | 10 | 35 | 10 | Pd | CZ+Al₂O₃ | Rh | CZ+Al₂O₃ | 19.8 | 1.0 | 20.0 | 78 | Pt | CZ+Al₂O₃ | 1.01 |
| Example 8 | Rh | CZA | 90.0 | 45 | 10 | 35 | 10 | Pd | CZ+Al₂O₃ | Rh | CZ+Al₂O₃ | 29.7 | 1.0 | 20.0 | 67 | Pt | CZ+Al₂O₃ | 1.02 |
| Example 9 | Rh | CZA | 90.0 | 45 | 10 | 35 | 10 | Pd | CZ+Al₂O₃ | Rh | CZ | 0.0 | - | 20.0 | 100 | Pt | CZ+Al₂O₃ | 1.01 |
| Comparative Example 1 | Rh | CZ+Al₂O₃ | 0.0 | - | - | - | - | Pd | CZ+Al₂O₃ | Rh | CZ+Al₂O₃ | 19.8 | 1.0 | 20.0 | 78 | Pt | CZ+Al₂O₃ | 1.19 |
| Comparative Example 2 | Rh | CZ+Al₂O₃ | 0.0 | - | - | - | - | Pd | CZ+Al₂O₃ | Rh | CZA | 40.5 | - | - | - | Pt | CZ+Al₂O₃ | 1.22 |
| Comparative Example 3 | Rh | CZA+CZ | 46.0 | 45 | 10 | 35 | 10 | Pd | CZ+Al₂O₃ | Rh | CZ+Al₂O₃ | 19.8 | 1.0 | 20.0 | 78 | Pt | CZ+Al₂O₃ | 1.09 |
| Comparative Example 4 | Rh | CZA+CZ | 27.0 | 45 | 10 | 35 | 10 | Pd | CZ+Al₂O₃ | Rh | CZ+Al₂O₃ | 19.8 | 1.0 | 20.0 | 78 | Pt | CZ+Al₂O₃ | 1.16 |
| Comparative I Example 5 | Rh | CZA | 90.0 | 45 | 10 | 35 | 10 | Pd | CZ+Al₂O₃ | Rh | CZ+Al₂O₃ | 41.6 | 1.0 | 20.0 | 53 | Pt | CZ+Al₂O₃ | 1.13 |
| Comparative Example 6 | Rh | CZA | 90.0 | 45 | 10 | 35 | 10 | Pd | CZ+Al₂O₃ | Rh | CZ+Al₂O₃ | 51.5 | 1.0 | 20.0 | 42 | Pt | CZ+Al₂O₃ | 1.19 |
| Comparative Example 7 | Rh | CZ+Al₂O₃ | 0.0 | - | - | - | - | Pd | CZA | Rh | CZ+Al₂O₃ | 19.8 | 1.0 | 20.0 | 78 | Pt | CZ+Al₂O₃ | 1.22 |

From Table 1, it can be seen that the exhaust gas purification catalysts in Examples can reduce the emission amount after the durability test and are excellent in durability.

### INDUSTRIAL APPLICABILITY

According to the present invention, an exhaust gas purification catalyst having excellent durability can be provided.

Although the present invention has been described in detail with reference to specific embodiments, it is apparent to those skilled in the art that various changes and modifications can be made without departing from the spirit and scope of the present invention.

The present application is based on a Japanese patent application (No. 2023-139973) filed on August 30, 2023, the contents of which are incorporated herein by reference.

### REFERENCE SIGNS LIST

1, 11 upstream catalyst
2, 12 downstream catalyst
A substrate A
a1 layer a1
a2 layer a2
B substrate B
b1 layer b1
b2 layer b2
10, 20 exhaust gas purification catalyst
X exhaust gas flow direction

## Claims

1. An exhaust gas purification catalyst comprising:
an upstream catalyst provided on an upstream side in an exhaust gas flow direction; and
a downstream catalyst provided on a downstream side in the exhaust gas flow direction, wherein
the upstream catalyst includes a substrate A and a layer a1 provided on the substrate A,
the downstream catalyst includes a substrate B and a layer b1 provided on the substrate B,
the layer a1 contains Rh and a Ce-Zr-Al-based composite oxide,
the layer b1 contains Rh and a Ce-Zr-based composite oxide,
a content of Al in terms of Al₂O₃ in the Ce-Zr-Al-based composite oxide contained in the layer a1 is 30 mass% or more with respect to a mass of the Ce-Zr-Al-based composite oxide,
a content of the Ce-Zr-Al-based composite oxide contained in the layer a1 is 50 mass% or more with respect to a mass of the layer a1, and
the layer b1 does not contain Al, or when Al is contained, a content of Al in terms of Al₂O₃ contained in the layer b1 is 30 mass% or less with respect to a mass of the layer b1.

2. The exhaust gas purification catalyst according to claim 1, wherein a content of Ce in terms of CeO₂ in the Ce-Zr-based composite oxide contained in the layer b1 is 25 mass% or less with respect to a mass of the Ce-Zr-based composite oxide.

3. The exhaust gas purification catalyst according to claim 1, wherein
the layer b1 contains an Al-based oxide, and
the Al-based oxide does not contain La, or when La is contained, a content of La in terms of La₂O₃ in the Al-based oxide is 7 mass% or less with respect to a mass of the Al-based oxide.

4. The exhaust gas purification catalyst according to claim 1, wherein a content of Ce in terms of CeO₂ in the Ce-Zr-Al-based composite oxide contained in the layer a1 is 2 mass% or more and 40 mass% or less with respect to the mass of the Ce-Zr-Al-based composite oxide.

5. The exhaust gas purification catalyst according to claim 1, wherein a content of Zr in terms of ZrO₂ in the Ce-Zr-Al-based composite oxide contained in the layer a1 is 10 mass% or more and 70 mass% or less with respect to the mass of the Ce-Zr-Al-based composite oxide.

6. The exhaust gas purification catalyst according to claim 1, wherein a content of Al in terms of Al₂O₃ in the Ce-Zr-Al-based composite oxide contained in the layer a1 is 60 mass% or less with respect to the mass of the Ce-Zr-Al-based composite oxide.

7. The exhaust gas purification catalyst according to claim 1, wherein 60 mass% or more of Rh contained in the layer b1 is supported on the Ce-Zr-based composite oxide.

8. The exhaust gas purification catalyst according to claim 1, wherein
a layer a2 is provided between the substrate A and the layer a1,
the layer a2 contains Pd and a Ce-Zr-based composite oxide, and
the layer a2 does not contain a Ce-Zr-Al-based composite oxide, or when the Ce-Zr-Al-based composite oxide is contained, a content of the Ce-Zr-based composite oxide contained in the layer a2 is 50 mass% or more with respect to a total mass of the Ce-Zr-based composite oxide and the Ce-Zr-Al-based composite oxide contained in the layer a2.
